# DEMANDE DE BREVET EUROPEEN

(11) **EP 2 014 910 A1**
(43) Date de publication de la demande: **14.01.2009**
(21) Numéro de dépôt: 08159030.9
(22) Date de dépôt: 25.06.2008
(51) Int. Cl.: F02N 11/08

(54) **Procédé d'arrêt/démarrage automatique d'un moteur thermique**

(30) Priorité: 09.07.2007 FR 0756368
(71) Demandeur: PEUGEOT CITROËN AUTOMOBILES S.A., 78140 Vélizy Villacoublay (FR)
(72) Inventeur: Calmels, David, 78300 Poissy (FR); Candellier, Brice, 80000 Amiens (FR); Martino, Mickaël, 92500 Rueil-Malmaison (FR); Mathieu, Boris, 75015 Paris (FR)
(74) Mandataire: Ménès, Catherine

(57) **Abrégé**

Procédé d'arrêt/démarrage automatique d'un moteur thermique d'un véhicule équipé d'une boîte de vitesse mécanique commandée par une pédale d'embrayage.

Selon l'invention, ledit procédé comprend des étapes consistant à :
- diviser la course de la pédale d'embrayage en une pluralité de zones d'enfoncement de ladite pédale,
- décider de l'arrêt ou du démarrage automatique dudit moteur thermique en fonction de conditions incluant la position de la pédale d'embrayage dans lesdites zones d'enfoncement.

Application aux véhicules disposant de la fonctionnalité d'arrêt/démarrage automatique du moteur thermique.

## Description

La présente invention concerne un procédé d'arrêt/démarrage automatique d'un moteur thermique.

L'invention s'applique plus particulièrement aux véhicules disposant de la fonctionnalité d'arrêt/démarrage automatique du moteur thermique, cette fonctionnalité étant également connue sous le terme anglo-saxon de « Stop and Start ».

Les véhicules auxquels s'adresse l'invention sont les véhicules équipés d'un moteur thermique et d'une boîte de vitesse mécanique, qu'ils soient conventionnels ou hybrides.

Dans le but de réduire la consommation et les émissions polluantes des véhicules automobiles, de nombreux systèmes mettant en oeuvre la fonctionnalité « Stop and Start » ont été développés.

Le mode de fonctionnement « Stop and Start » consiste, sous certaines conditions, à provoquer l'arrêt complet du moteur thermique lorsque le véhicule est lui-même à l'arrêt, puis à redémarrer le moteur thermique à la suite, par exemple, d'une action du conducteur interprétée comme une demande de redémarrage. Une situation typique de « Stop and Start » est celle de l'arrêt à un feu rouge. Lorsque le véhicule s'arrête au feu, le moteur thermique est automatiquement stoppé. Puis, quand le feu devient vert, le moteur est redémarré, au moyen d'un démarreur classique ou d'un alterno-démarreur, à la suite de la détection par le système de pilotage de toute action pouvant être interprétée comme la volonté du conducteur de redémarrer son véhicule.

Bien entendu, l'arrêt et le redémarrage automatiques du moteur thermique dans le cadre de la fonctionnalité « Stop and Start » sont soumis à des règles, appelées aussi stratégies, dont le but est de définir des conditions qui, si elles sont remplies, permettent de conclure, soit que le véhicule est arrêtée, ou sur le point de l'être, soit, au contraire qu'un redémarrage du moteur est demandée, et ainsi de mettre en oeuvre les procédures d'arrêt ou de démarrage automatique du moteur thermique.

La demande de brevet français n° 2 816 891 fournit des stratégies particulières d'arrêt et de redémarrage automatiques. A titre d'exemple, une stratégie d'arrêt décrite dans ce document consiste à arrêter le moteur thermique si la pédale d'embrayage est relâchée, le levier de vitesse est au point mort et la vitesse du véhicule est inférieure à 2 km/h.

Ces stratégies connues peuvent être complétées par d'autres basées sur l'observation de l'état de l'embrayage, de la position du levier de vitesse et de la position de la pédale de frein. Ainsi, par exemple, la volonté du conducteur de redémarrer le moteur peut se traduire par la sortie du point mort ou le relâchement du pied du frein.

L'intérêt de ces nouvelles stratégies est de mieux détecter l'intention du conducteur d'arrêter ou redémarrer le moteur thermique de son véhicule. On peut ainsi améliorer l'adaptation du conducteur au système d'arrêt/démarrage automatique qui devient alors plus intuitif.

Il convient cependant de remarquer que les stratégies actuellement proposées dans le contexte « Stop and Start » ne prennent pas en compte une situation particulière qui pourrait néanmoins être interprétée comme une volonté du conducteur de redémarrer le moteur thermique de son véhicule. Il s'agit des phases de « léchage » où le conducteur ré-embraye tout en gardant le pied sur le frein, notamment lors des redémarrages en pente.

D'autre part, il faut également constater que les stratégies d'arrêt/démarrage automatique connues prenant en compte l'état de l'embrayage ne sont pas optimisées en termes d'économie de consommation de carburant.

Aussi, un but de la présente invention est de proposer un procédé d'arrêt/démarrage automatique d'un moteur thermique d'un véhicule équipé d'une boîte de vitesse mécanique commandée par une pédale d'embrayage, qui permettrait, d'une part, d'élargir les stratégies de démarrage automatique aux phases de léchage, et, d'autre part, d'augmenter encore le gain en consommation d'énergie procuré par la fonctionnalité « Stop and Start ».

Ce but est atteint, conformément à l'invention, du fait que ledit procédé comprend des étapes consistant à :
- diviser la course de la pédale d'embrayage en une pluralité de zones d'enfoncement de ladite pédale,
- décider de l'arrêt ou du démarrage automatique dudit moteur thermique en fonction de conditions incluant la position de la pédale d'embrayage dans lesdites zones d'enfoncement.

Selon un mode de mise en oeuvre du procédé conforme à l'invention, un démarrage automatique du moteur thermique est décidé si :
- la position de la pédale d'embrayage se trouve dans une zone d'enfoncement définie par deux points situés à proximité du point de libération de l'embrayage,
- le gradient de relâchement de la pédale d'embrayage est inférieur à un seuil donné,
- le levier de vitesse est hors point mort,
- la pédale de frein du véhicule est enfoncée.

Ces conditions, en particulier celle relative au gradient de relâchement de la pédale d'embrayage, correspondent à celles d'un léchage effectué par le conducteur du véhicule. L'invention permet donc de prendre en compte ce mode de fonctionnement particulier dans les stratégies de démarrage automatique du moteur thermique du véhicule.

Les trois modes de mise en oeuvre qui vont maintenant être énumérés présentent tous l'avantage d'apporter une contribution supplémentaire à la diminution de la consommation du véhicule recherchée par le système « Stop and Start », ceci en anticipant l'arrêt ou le démarrage automatique avant que la pédale d'embrayage ne soit parvenue, soit en butée d'enfoncement, soit en butée de relâchement.

Selon un premier mode, un arrêt automatique du moteur thermique est décidé si :
- la position de la pédale d'embrayage se trouve dans une zone d'enfoncement définie par un point situé à proximité de la position relâchée de la pédale d'embrayage et la position relâchée de la pédale d'embrayage,
- le levier de vitesse est au point mort,
- la vitesse du véhicule est inférieure à une vitesse-seuil donnée.

Selon un deuxième mode, un arrêt automatique du moteur thermique est décidé si :
- la position de la pédale d'embrayage se trouve dans une zone d'enfoncement définie par un point situé à proximité de la position enfoncée de la pédale d'embrayage et la position enfoncée de la pédale d'embrayage,
- la pédale de frein est enfoncée,
- la vitesse du véhicule est inférieure à une vitesse-seuil donnée.

Selon un troisième mode, un démarrage automatique du moteur thermique est décidé si :
- la position de la pédale d'embrayage se trouve dans une zone d'enfoncement définie par un point situé dans la zone de transmission de couple de l'embrayage et la position enfoncée de la pédale d'embrayage,
- le levier de vitesse est hors point mort,
- la pédale de frein du véhicule est relâchée.

La description qui va suivre en regard du dessin annexé, donné à titre d'exemple non limitatif, fera bien comprendre en quoi consiste l'invention et comment elle peut être réalisée.

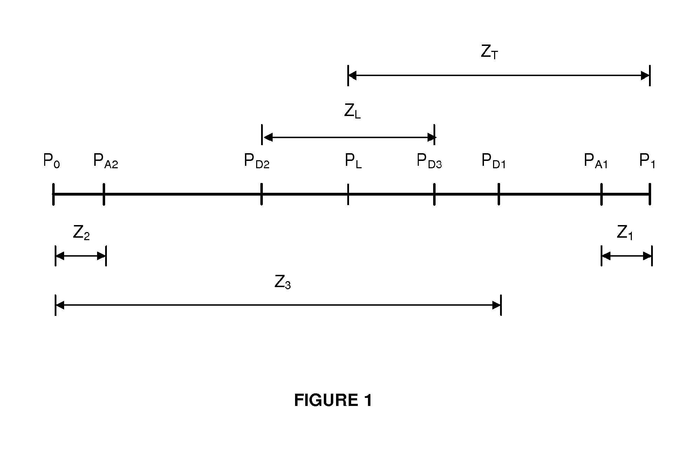

La figure 1 est un diagramme montrant différentes zones de la course d'une pédale d'embrayage d'un véhicule mettant en oeuvre le procédé d'arrêt/démarrage automatique conforme à l'invention.

Sur la figure 1 est représenté un diagramme de la course d'une pédale d'embrayage d'un véhicule à boîte de vitesse mécanique, comprise entre un point P₀ où la pédale est complètement enfoncée et un point P₁ où la pédale est complètement relâchée.

Par ailleurs, le véhicule est équipé d'un système d'arrêt/démarrage automatique « Stop and Start » dont l'invention se propose de définir des stratégies qui sont toutes caractérisées par le fait que la décision d'arrêter ou de redémarrer automatiquement le moteur thermique du véhicule est prise en fonction de conditions incluant la position de la pédale d'embrayage dans des zones d'enfoncement indiquées sur le diagramme de la figure 1.

Comme l'indique le figure 1, différentes zones d'enfoncement peuvent être définies.

La zone Z₁ s'étend entre le point P₁ de relâchement complet de la pédale d'embrayage et un point P_{A1} situé à proximité.

De manière symétrique, la zone Z₂ s'étend du point P₀ d'enfoncement complet de la pédale d'embrayage à un point P_{A2} situé à proximité.

La zone Z_{T} est la zone de transmission de couple de l'embrayage située entre le point P_{L} de libération de l'embrayage au point P₁ de relâchement complet.

A proximité du point P_{L} de libération est définie une zone Z_{L} entre deux points P_{D2} et P_{D3}.

Enfin, une dernière zone Z₃ s'étend entre le point P₀ d'enfoncement complet et un point P_{D1} situé dans l'exemple ici illustré dans la zone Z_{T} de transmission de couple.

Une stratégie particulièrement avantageuse incluant la position de la pédale d'embrayage le long de sa course consiste à décider du redémarrage automatique du moteur thermique lorsque :
- la position de la pédale d'embrayage se trouve dans la zone ZL d'enfoncement à proximité du point PL de libération,
- le gradient de relâchement de la pédale est inférieur à un seuil donné,
- le levier de vitesse est hors point mort,
- la pédale de frein du véhicule est enfoncée.

Comme cela a été dit plus haut, ces conditions correspondent à une phase de léchage, à savoir ré-embrayage tout en gardant le pied sur le frein, qui se produit notamment lors de démarrages en pente.

Les autres stratégies sont les suivantes.

Un arrêt automatique est décidé si :
- la pédale d'embrayage est située dans la zone Z1 d'enfoncement, entre les points PA1 et P1,
- le levier de vitesse est au point mort,
- la vitesse du véhicule est inférieure à une vitesse-seuil V1.

Un arrêt automatique est également décidé si :
- la position de la pédale d'embrayage se trouve dans la zone Z2 d'enfoncement définie par les points PA2 et P0,
- la pédale de frein est enfoncée,
- la vitesse du véhicule est inférieure à une vitesse-seuil donnée V2.

Enfin, un redémarrage automatique est décidé si :
- la pédale d'embrayage est dans la zone Z3 d'enfoncement, entre les points PD1 et P0,
- le levier de vitesse est hors point mort,
- la pédale de frein du véhicule est relâchée.

Le choix du seuil de gradient de relâchement ainsi que les vitesses-seuil V₁ et V₂ d'arrêt du moteur thermique n'est limité que par des contraintes d'agrément et sécuritaires.

Ce sont également des contraintes d'agrément et sécuritaires qui dictent le choix des points P_{A1}, P_{A2}, P_{D1}, P_{D2} et P_{D3}. La position des points P_{D1}, P_{D2} et P_{D3} peut évoluer au cours du temps pour prendre en compte l'effet de vieillissement de l'embrayage.

Les points P_{D2} et P_{D3} définissant la zone Z_{L} peuvent être choisis de part et d'autre du point P_{L} de libération, comme indiqué sur la figure 1.

II convient également de remarquer que les points P_{D3} et P_{D1}, d'une part, et P_{A2} et P_{D2}, d'autre part, peuvent être choisis confondus.

Enfin, dans une version simplifiée de la stratégie de léchage, le gradient de relâchement peut être observé, non plus dans une zone étendue telle que Z_{L}, mais dans une zone limitée à un seul point, dans ce cas P_{D2} = P_{D3}.

Les avantages du procédé d'arrêt/démarrage automatique conforme à l'invention consistent en une optimisation des stratégies connues. Outre la prise en compte de la situation de léchage, les stratégies qui viennent d'être décrites permettent par exemple une augmentation du gain de consommation de 40 à 60% sur le cycle d'homologation selon le choix des vitesses-seuil V₁ et V₂ d'arrêt du moteur thermique.

## Revendications

1. Procédé d'arrêt/démarrage automatique d'un moteur thermique d'un véhicule équipé d'une boîte de vitesse mécanique commandée par une pédale d'embrayage, **caractérisé en ce que** ledit procédé comprend des étapes consistant à :
• diviser la course de la pédale d'embrayage en une pluralité de zones dans lesquelles la pédale d'embrayage n'est pas en position relâchée, mais avec des degrés divers d'enfoncement de ladite pédale,
• décider de l'arrêt ou du démarrage automatique dudit moteur thermique en fonction de conditions incluant la position de la pédale d'embrayage dans lesdites zones d'enfoncement.

2. Procédé selon la revendication 1, dans lequel un arrêt automatique du moteur thermique est décidé si :
• la position de la pédale d'embrayage se trouve dans une zone (Z1) d'enfoncement définie par un point (PA1) situé à proximité de la position relâchée (P1) de la pédale d'embrayage et la position relâchée (P1) de la pédale d'embrayage,
• le levier de vitesse est au point mort,
• la vitesse du véhicule est inférieure à une vitesse-seuil donnée (V1).

3. Procédé selon la revendication 1, dans lequel un arrêt automatique du moteur thermique est décidé si :
• la position de la pédale d'embrayage se trouve dans une zone (Z2) d'enfoncement définie par un point (PA2) situé à proximité de la position enfoncée (P0) de la pédale d'embrayage et la position enfoncée (P0) de la pédale d'embrayage,
• la pédale de frein est enfoncée,
• la vitesse du véhicule est inférieure à une vitesse-seuil donnée (V2).

4. Procédé selon la revendication 1, dans lequel un démarrage automatique du moteur thermique est décidé si :
• la position de la pédale d'embrayage se trouve dans une zone (Z3) d'enfoncement définie par un point (PD1) situé dans la zone (ZT) de transmission de couple de l'embrayage et la position enfoncée (P0) de la pédale d'embrayage,
• le levier de vitesse est hors point mort,
• la pédale de frein du véhicule est relâchée.

5. Procédé selon la revendication 1, dans lequel un démarrage automatique du moteur thermique est décidé si :
• la position de la pédale d'embrayage se trouve dans une zone (ZL) d'enfoncement définie par deux points (PD2, PD3) situés à proximité du point (PL) de libération de l'embrayage,
• le gradient de relâchement de la pédale d'embrayage est inférieur à un seuil donné,
• le levier de vitesse est hors point mort,
• la pédale de frein du véhicule est enfoncée.

6. Procédé selon la revendication 5, dans lequel les deux points (P_{D2}, P_{D3}) définissant la zone (Z_{L}) d'enfoncement sont situés de part et d'autre du point (P_{L}) de libération de l'embrayage.

7. Procédé selon la revendication 5, dans lequel les deux points (P_{D2}, P_{D3}) définissant la zone (Z_{L}) d'enfoncement sont confondus au point (P_{L}) de libération de l'embrayage.
